# EUROPÄISCHE PATENTSCHRIFT

(11) **EP 0 337 422 B1**
(45) Veröffentlichungstag und Bekanntmachung des Hinweises auf die Patenterteilung: **15.11.1995**
(21) Anmeldenummer: 89106501.3
(22) Anmeldetag: 12.04.1989
(51) Int. Cl.: C08G 18/08, C08G 18/42, C08G 18/80, C09D 5/44

(54) **Wasserverdünnbare Bindemittel und deren Verwendung für Überzugsmittel insbesondere im Kraftfahrzeugbau**
Waterdilutable binders and their use as coatings especially in the car industry
Liants diluables à l'eau et leur utilisation comme revêtement spécialement dans la construction d'automobiles

(30) Priorität: 13.04.1988 DE 3812251
(43) Veröffentlichungstag der Anmeldung: 18.10.1989
(73) Patentinhaber: Herberts Gesellschaft mit beschränkter Haftung, 42285 Wuppertal (DE)
(72) Erfinder: Patzschke, Hans-Peter, Dr., D-5600 Wuppertal 2 (DE); Göbel, Armin, D-5600 Wuppertal 2 (DE)
(74) Vertreter: Türk, Gille, Hrabal, Leifert

(56) Entgegenhaltungen:
- EP-A- 0 134 970
- EP-A- 0 189 728
- EP-A- 0 201 444
- EP-A- 0 304 834
- FR-A- 2 068 616

## Beschreibung

Die Erfindung betrifft wässrige Bindemittel, die insbesondere für die Herstellung von an der Kathode abscheidbaren Überzugsmitteln geeignet sind. Unter Verwendung der erfindungsgemäßen wasserverdünnbaren Bindemittel hergestellte Überzüge weisen eine ausgezeichnete Korrosionsschutzwirkung und verbessete Steinschlagfestigkeit auf.

Es ist bekannt, daß verschiedene organische Bindemittelsysteme nach Salzbildung in einem wässrigen Medium dispergiert und auf elektrophoretischem Wege unter Anlegen eines elektrischen Stromes auf einem leitenden metallischen Gegenstand, der in das wässrige Bad eingetaucht wird, abgeschieden werden können. Als Elektrophoreselacke oder EC-Lacke mit hohem Umgriff und sehr gutem Korrosionsschutz auf metallischen Flächen z.B. Blechen werden dabei in der Praxis vorwiegend an der Kathode abscheidbare Bindemittel verwendet. Die thermische Vernetzung der abgeschiedenen Filme erfolgt beispielsweise durch Einbau von teilblockierten Polyisocyanaten oder durch Zumischen von vollblockierten Polyisocyanaten, wie beispielsweise in DE-A-20 57 799, DE-A-21 31 060, DE-A-25 31 960 und DE-A-26 03 666 beschrieben. In diesen Patentbeschreibungen werden allgemeine Aufzählungen über die einsetzbaren blockierten Polyisocyanate gemacht oder es werden neue Blockierungsmittel beschrieben. Es fehlen dabei jegliche Hinweise auf Mischungen von speziellen Polyisocyanaten, die eine Verbesserung der Steinschlagfestigkeit bewirken.

In der DE-C 35 45 205 werden Elektrotauchlack-überzugsmittel beschrieben, die neben dem Bindemittel vernetzende Gemische aus einem reaktiven Verdünner A und einer mindestens drei blockierte Isocyanatgruppen enthaltenden Verbindung B mit einem zahlenmittleren Molekulargewicht von 750 - 10000 enthalten. Die als Verdünner eingesetzte Komponente A kann eine Verbindung mit zwei blockierten Isocyanatgruppen sein, die ein geringes zahlenmittleres Molekulargewicht von weniger als 715 aufweist und eine geringe Aminzal von unter 30 haben kann. Der Lösungsmittelcharakter des reaktiven Verdünners A bedingt hohe Schichtdicken. Eine verbesserte Steinschlagschutzwirkung wird nicht beschrieben.

In der DE-A-30 04 538 wird ein Polyisocyanatgemisch aus teilweise und vollständig blockierten aromatischen Polyisocyanaten und einem nichtblockierten difunktionellem Polyisocyanat eingesetzt, um durch die an der Kathode abgeschiedene (KTL)-Grundierung im Zweischichtaufbau keine Qualitätsverschlechterung im Decklack durch farbige Spaltprodukte beim Einbrennen zu bekommen. In der DE-A-34 32 233 und EP-A-249 884 werden blockierte Polyisocyanatgemische mit unterschiedlicher Reaktivität, d.h. mit unterschiedlichen Blockierungsgruppen verwendet, um Untergrundfehler des eingebrannten Films zu vermeiden. In der EP-A-201 444 wird außer einem blockierten Polyisocyanat als reaktivem Vernetzer noch ein blockiertes Polyisocyanat mit einer niedrigeren Glasübergangstemperatur (Tg<22°C) als reaktiver Verdünner zugesetzt, um unter Verringerung des Gehaltes an Coaleszenzmitteln einen gut verlaufenden Elektrotauchlack-Film (ET-Film) zu erhalten. In allen diesen Mischungsbeispielen finden sich keine Hinweise auf eine Verbesserung der Steinschlagfestigkeit durch eine gezielte Auswahl von Polyisocyanat-Mischungen.

Die Marktanforderungen an die Eigenschaften von Überzugsmitteln, die an der Kathode abgeschieden werden können, werden laufend gesteigert durch Senken des Lösemittelgehaltes und der Einbrenntemperatur bei Aufrechterhaltung oder Steigerung der Umgriffs- und Korrosionsschutzeigenschaften. Dabei wird heute besonderer Wert auf eine erhöhte Steinschlagfestigkeit gelegt.

Der Erfindung liegt die Aufgabe zugrunde, Bindemittelsysteme für an der Kathode abscheidbare, wässrige Elektrotauchlack-Überzugsmittel bereitzustellen, die den vorstehenden Anforderungen genügen und gegenüber den bekannten Überzugsmitteln Verbesserungen hinsichtlich der Steinschlagfestigkeit zeigen.

Es wurde nun überraschenderweise gefunden, daß diese Aufgabenstellung durch eine gezielte Auswahl der eingesetzten blockierten Polyisocyanate gelöst werden kann.

Gegenstand der Erfindung sind wasserverdünnbare Bindemittel, enthaltend
A) 40 bis 90 Gew.-% durch Neutralisation mit Säuren wasserverdünnbare Basisharze mit einer zahlenmittleren Molmasse Mn von 500 bis 20000 und einer Aminzahl von 30 bis 150, die primäre und/oder sekundäre und/oder tertiäre Aminogruppen sowie mindestens 2 Hydroxylgruppen pro Molekül enthalten.
B) 10 bis 60 Gew.-% eines vollständig blockierten Polyisocyanatgemisches aus
   1. einem oder mehreren, Urethangruppen und gegebenenfalls Harnstoffgruppen enthaltenden, OH-Gruppen-freien, endständigen blockierten Diisocyanaten, bei denen es sich um Reaktionsprodukte aus H-reaktiven difunktionellen Verbindungen, die zumindest teilweise tertiäre Aminogruppen enthalten, mit Diisocyanaten handelt, mit einer zahlenmittleren Molmasse Mn von 750 bis 8000 und einem Gehalt an tertiären Aminogruppen entsprechend einer Aminzahl von 30 bis 150, und
   2. mehr als zwei blockierte Isocyanatgruppen aufweisenden aromatischen und/oder aliphatischen blockierten Polyisocyanaten mit einer zahlenmittleren Molmasse Mn von 500 bisa 1500,
   wobei die Komponenten B1) und B2) in einem Gewichtsverhältnis von 1 : 1 bis 1 : 10 enthalten sind, und wobei das Äquivalentverhältnis von primären bzw. sekundären Aminogruppen und Hydroxylgruppen der Komponente A) zu den blockierten Isocyanatgruppen der Komponente B) im Bereich von 1 : 0,1 bis 1,5 liegt.

Die in dem erfindungsgemäßen wasserverdünnbaren Bindemittel als Komponente A enthaltenen Basisharze enthalten Hydroxylgruppen, primäre und/oder sekundäre Aminogruppen als H-reaktive Gruppen, die mit blockierten Isocyanatgruppen reagieren können. Tertiäre Aminogruppen, quaternäre Aminogruppen, quaternäre Phosphoniumgruppen und/oder ternäre Sulfoniumgruppen dienen zur Erzielung der Wasserdispergierbarkeit oder -löslichkeit. Es können auch Komponenten ohne derartige funktionelle Gruppen eingemischt werden, sofern die Wasserverdünnbarkeit nicht beeinträchtigt wird.

Das wasserverdünnbare Basisharz (Komponente A) kann ein Polyadditions-, Polykondensations- oder Polymerisationsprodukt mit einer zahlenmittleren Molmasse Mn von 500 bis 20000, insbesondere 1000 bis 10000 (gemessen durch Gelpermeationschromatographie, geeicht mit Polystyrolfraktionen). Seine Viskosität beträgt bevorzugt 0.05 bis 10 Pa.s, insbesondere 0.1 bis 5 Pa.s, gemessen in 50%iger Lösung in Monoglykolethern (insbesondere Butoxyethanol) bei 25°C. Seine Glasübergangstemperatur liegt insbesondere bei -50 bis +150°C, bevorzugt bei -20 bis +50°C. Die geeigneten mittleren Molmassen bzw. Viskositäten können auch dadurch erhalten werden, daß Harze mit höherer und niedrigerer Molmasse bzw. Viskosität vermischt werden.

Der chemische Aufbau kann aus den verschiedensten Verbindungsklassen ausgewählt werden. Für die Löslichkeit ist es wichtig, daß pro Molekül mindestens eine zur Salzbildung befähigte Gruppe wie beispielsweise primäre, sekundäre oder tertiäre Aminogruppen vorhanden sind. Es können jedoch auch (gegebenenfalls anteilweise) quaternäre Ammonium- oder Phosphoniumsalz-Gruppen, sowie ternäre Sulfoniumgruppen im Molekül enthalten sein. Für die Vernetzungsfähigkeit ist es wichtig, daß sie im Mittel mindestens zwei H-reaktive Stellen, beispielsweise zwei Hydroxylgruppen und/oder primäre und/oder sekundäre Aminogruppen besitzen. Enthält die Komponente (A) eine ausreichende Menge an Aminogruppen, daß sie nach Protonisieren mit Säuren wasserlöslich oder wasserdispergierbar wird, so lassen sich durch Einemulgieren von blockierten Polyisocyanaten (Komponente B) wasserdispergierbare Einbrennbindemittel herstellen, aus denen sich nach elektrophoretischer Abscheidung und thermischer Vernetzung besonders gute Korrosionsschutzgrundierungen oder Einschichtlacke herstellen lassen.

Das wasserverdünnbare Basisharz (Komponente A) hat eine Aminzahl von 30 bis 150 (mg KOH pro g Festharz) und bevorzugt eine Hydroxylzahl von 30 bis 500 oder 0.9 bis 8.9 Milliäquivalente Hydroxylgruppen pro g Festharz . Die obere Grenze der Aminzahl beträgt bevorzugt 120, besonders bevorzugt 100, die untere Grenze der Aminzahl liegt bevorzugt bei 45, besonders bevorzugt bei 70. Ist die Aminzahl zu niedrig, so ist die Löslichkeit zu gering oder es entstehen durch einen zu hohen Neutralisationsgrad zu saure pH-Werte in den Elektrophoresebädern. Ist die Aminzahl zu hoch, so haftet der abgeschiedene Film schlecht oder es entsteht eine unruhige Oberfläche mit unterschiedlichen Schichtstärken. Für die beim Einbrennen ablaufenden Vernetzungsreaktionen sind die im Molekül vorhandenen Hydroxylgruppen wesentlich. Ihre Zahl beträgt mindestens 2, bevorzugt mindestens 3 und besonders bevorzugt mindestens 4 Hydroxylgruppen pro Molekül. Es wird eine obere Grenze der Hydroxylzahl von 400 bevorzugt, bzw. von 300 besonders bevorzugt. Die untere Grenze der Hydroxylzahl liegt bevorzugt bei 50, besonders bevorzugt bei 100. Ist die Hydroxylzahl zu niedrig, so entstehen bei der Vernetzung Filme, die noch in organischen Lösemitteln wie Aceton oder Methyl-ethylketon anquellbar sind. Ist die Hydroxylzahl dagegen zu hoch, so wird der Film zu spröde und bleibt eventuell auch zu hydrophil. Harze mit quaternären Ammonium- oder Phosphoniumgruppen, bzw. ternären Sulfoniumgruppen werden im allgemeinen zur Herstellung von geeigneten Pigmentpastenbindemitteln zugemischt.

Es werden 40 bis 90 Gew.-% des wasserverdünnbaren Basisharzes (Komponente A) mit 10 bis 60 Gew.-% der blockierten Polyisocyanatmischung (Komponente B) besonders 50 bis 80
Gew.-% der Komponente A mit 20 bis 50 Gew.-% der Komponente B, besonders bevorzugt 55 bis 70 Gew.-% der Komponente A mit 30 bis 45 Gew.-% der Komponente B gemischt. Das Äquivalentverhältnis von primären bzw. sekundären Aminogruppen und Hydroxylgruppen der Komponente A zu den blockierten Isocyanatgruppen der Komponenten B liegt im Bereich von 1:0,1 bis 1,5, vorzugsweise bei 1:0,7 bis 1,2, und beträgt besonders bevorzugt 1:1. Die Komponenten (A) und (B) können kalt oder in der Wärme gemischt und dabei gegebenenfalls auch insbesondere bei erhöhten Temperaturen präkondensiert werden. Dabei reagieren die Komponenten (A) und (B) in gewissem Umfang miteinander, ohne daß das Gemisch seine Hitzehärtbarkeit und die Eigenschaft, durch Protonisieren mit Säuren wasserlöslich gemacht werden zu können, verliert.

Die Herstellung von basischen Polyaminharzen, die erfindungsgemäß als Komponente (A) verwendet werden, ist bekannt und wird in vielen Patentpublikationen beschrieben, beispielsweise
1. Addukte aus modifizierten Polyepoxiden und Ketiminen, die aus Polyaminen mit einer sekundären und mindestens einer primären Aminogruppe hergestellt werden (DE-A-27 01, 002, DE-A-20 57 799).
2. Addukte aus modifizierten Polyepoxiden und Polyaminen (DE-A-37 12 805 oder Ammoniak (DE-A-36 24 313).
3. Modifizierte Epoxidharze, die durch Reaktion mit ungesättigten oder basischen Monoisocyanaten erhalten werden (DE-A-27 07 405 oder DE-A-27 07 482).
4. Mannichbasen, erhalten aus modifizierten Phenolen durch Umsetzung mit Formaldehyd und sekundären Aminen oder Aminoalkoholen (DE-A-27 51 499, DE-A-27 59 428, EP-A-209 857).
5. Copolymere, die mindestens ein basisches Acryl- oder Vinylmonomer enthalten (DE-A-15 46 854, DE-A-20 57 799, DE-A-34 36 346).
6. Reaktionsprodukte von maleinisierten oder epoxidierten Polybutadienölen mit Aminen (DE-A-27 28 470, DE-A-27 32 736).
7. OH-gruppenhaltige Amino-Polyurethane (DE-A-34 65 329).
8. Polykondensate aus Polycarbonsäuren und einem Polyamin, das mindestens zwei basische Aminogruppen enthält (US-A-2 450 940).
9. Addukte aus Polycarbonsäureharzen und Alkylenimin (US-A-3 403 088).
10. Basische Harze, die quaternäre Ammonium- oder Phosphoniumsalzgruppen, bzw. ternäre Sulfoniumsalzgruppen enthalten (DE-A-25 31 960).
11. Basische Harze, die neben Hydroxyl- und Aminogruppen auch blockierte Isocyanatgruppen enthalten.

Der chemische Aufbau eines bevorzugten Aminoepoxidharzes und seine Eigenschaften können in weitem Umfang variiert werden, beispielsweise durch
- die Auswahl der Epoxidharze und der Amine,
- die Anzahl der Amino- und Hydroxylgruppen,
- die Molmasse und das Molverhältnis von Basisharz und Vernetzer,
- das Verhältnis von harten und weichen Molekülsegmenten.

Epoxidgruppenhaltige Harze mit vorzugsweise endständigen 1,2-Epoxidgruppen sind Polyglycidylether, Polyglycidylamine oder epoxidgruppenhaltige Poly-Kohlenwassserstoffe, mit einer mittleren Molmasse von 140 - 4000 und einem Epoxidäquivalentgewicht von etwa 70 bis 2600. Geeignete Epoxidharze sind beispielsweise Verbindungen der allgemeinen Formel 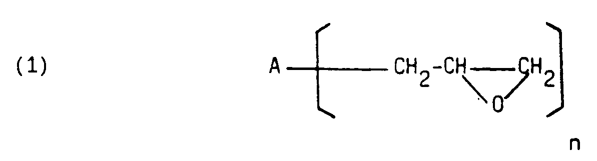
in welcher
A für den Rest eines mehrwertigen, bevorzugt zweiwertigen Alkohols, Phenols, Amins oder entsprechender heterocyclischer Verbindungen und
n für eine Zahl von 1.5 bis 6, bevorzugt 1.8 - 4, vorzugsweise 2, steht und die auch als Gemische eingesetzt werden können.

Besonders bevorzugt werden verwendet Polyglycidylether, die etwa zwei 1.2-Epoxidgruppen pro Molekül enthalten, mit einer mittleren Molmasse von etwa 300 bis 1500 und einem Epoxidäquivalentgewicht von etwa 170 bis 1000, besonders 180 bis 500,
in welcher
A für den Rest eines mehrwertigen, bevorzugt zweiwertigen Alkohols, Phenols, Amins oder entsprechender heterocyclischer Verbindungen und
n für eine Zahl von 1.5 bis 6, bevorzugt 1.8 - 4, vorzugsweise 2, steht und die auch als Gemische eingesetzt werden können.

Sie werden beispielsweise hergestellt durch Reaktion von Epihalogenhydrinen bzw. Methylepihalogenhydrinen, bevorzugt Epichlorhydrin mit zweiwertigen Phenolen, wobei durch Auswahl der Molverhältnisse und Zusatz geeigneter basischer Katalysatoren, wie Ammonium- oder Phosphoniumsalzen die Molmasse eingestellt werden kann. Unter die Formel (1) fallen z.B. Harze der folgenden Formel: 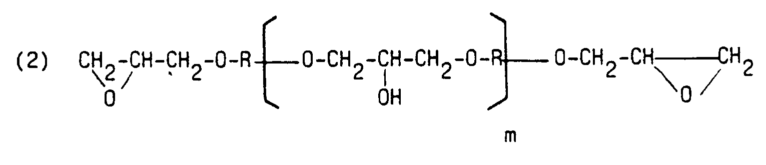
wobei
m = 0 bis 5, bevorzugt 0 bis 2 und R bevorzugt der Rest eines Bisphenols folgender Struktur ist: 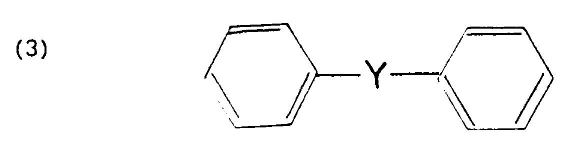
wobei
Y = -CH₂-, -C(CH₃)₂-, -CO-, -S-, -SO-, -SO₂- oder -C(CCl₃)₂-und bevorzugt -C(CH₃)₂- ist.
Die Aromatenringe können gegebenenfalls durch Halogene oder Alkylgruppen substituiert sein.

Typische zweiwertige Phenole sind Hydrochinon, Resorcin, 1.5-Dihydroxynaphthalin, p.p'-Dihydroxydiphenylpropan, p.p'-Dihydroxybenzophenon, p.p'-Dihydroxydiphenylmethan, p.p'-Dihydroxydiphenylethan, p.p'-Dihydroxydi-tertiärbutylphenylpropan oder Bis(2-hydroxynaphthyl)methan. Bevorzugt werden technische Mischungen, wie Dihydroxydiphenylpropan, besonders die 4.4'-Isomeren mit geringen Anteilen an 2.2' oder 4.2'-Isomeren. Die beschriebenen Epoxidharze konnen auch vollständig oder teilweise hydriert sein, wie beispielsweise 1.4-Bis(2.3-epoxypropoxy)-cyclohexan oder in Gemischen mit unterschiedlicher Struktur und Molmasse eingesetzt werden.

Diese beschriebenen Polyepoxidharze können gegebenenfalls anteilweise durch elastischere Modifikationen ersetzt werden. Sie entstehen auf Basis von zweiwertigen Phenolen, besonders Bisphenolen, durch Umsetzung der Polyepoxidharze mit Polyalkoholen, bevorzugt langkettigen Dialkanolen (HO-E-OH) wie Butandiol-1.4 oder Hexandiol-1.6 in Gegenwart geeigneter Katalysatoren unter Bildung von: 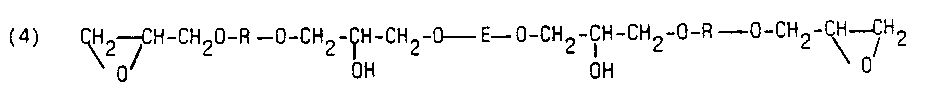
oder durch Umsetzung von mehrwertigen Phenolen mit Alkylenoxiden wie Ethylenoxid, Propylenoxid, Butylenoxid, Stearyloxid und anschließende Reaktion mit Epichlorhydrin unter Bildung von: 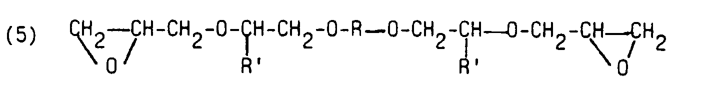
wobei
R' = Wasserstoff oder ein niederer Alkylrest, bevorzugt -CH₃ oder -C₂H₅ bedeutet. Ebenfalls geeignet sind Polyglycidylether von mehrwertigen Alkoholen, die durch folgende allgemeine Formel gekennzeichnet sind, die von der vorstehenden allgemeinen Formel (1) umfaßt werden: 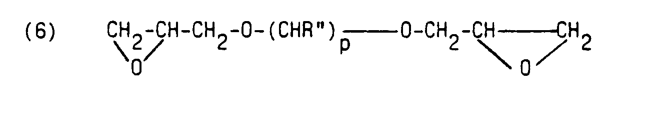
wobei
R'' = Wasserstoff oder ein niedriger, gegebenenfalls mit verschiedenen Substituenten versehener Alkylrest, bevorzugt -CH₃ oder -C₂H₅ und p = 2 bis 15 ist. Typische Beispiele hierfür sind die Reaktionsprodukte von Epichlorhydrin und Ethylenglykol, 1.2- und 1.3-Propylenglykol, 1.2- und 1.4-Butandiol, 1.5-Pentandiol, 2-Ethyl-hexandiol-1.6, aber auch Verbindungen wie 1.2.6-Hexantriol oder Bis-(4-hydroxycyclohexyl)-2.2-propan. Geeignete Polyglycidylether können aber auch der Formel: 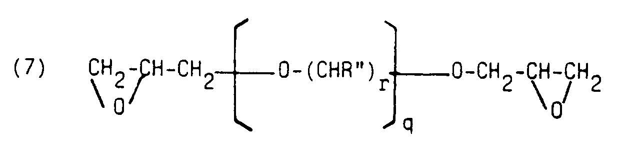
entsprechen, die ebenfalls unter die allgemeine Formel (1) fällt, wobei R'' dieselbe Bedeutung wie oben hat und r = 2 bis 6 und q = 1 bis 20 bedeuten. Typische Beispiele hierfür sind die Reaktionsprodukte von Epichlorhydrin und den aus Ethylenglykol, 1.2-Propylenglykol oder 1.2-Butylenglykol erhaltenen Polyethern, wie Polyethylenglykole, Polypropylenglykole oder Polybutylenglykole mit verschiedenen Molmassen.

Unter die Formel (1) fallen auch heterocyclische Polyepoxidverbindungen, die ebenfalls verwendet werden können, wie 1.3-Diglycidyl-5.5-dimethylhydantoin oder Triglycidylisocyanurat. Eine andere geeignete Klasse von Polyepoxiden sind Polyglycidylether von phenolischen Novolakharzen. Sie werden durch Einwirken von Formaldehyd auf Phenole im molaren Verhältnis von 1:0,5 bis 0,8 unter sauren Bedingungen kondensiert und anschließend mit Epichlorhydrin umgesetzt. Sie haben ein Epoxid-Äquivalentgewicht von 150 bis 300, bevorzugt 170 bis 210 und enthalten etwa 2 bis 4 Glycidyl-Gruppen pro Molekül. Bei diesem Harzsystem ist zu berücksichtigen, daß es im allgemeinen eine höhere durchschnittliche Molmasse hat, beispielsweise zwischen 474 und 3000. Die Harze können durch Reaktion mit Monoalkylphenolen wie Nonylphenol defunktionalisiert werden.

Aminogruppen werden zweckmäßig durch Addition von NH-reaktiven Verbindungen an die Epoxidgruppen eingeführt. Die Umsetzung geschieht daher ungefähr im Äquivalenzverhältnis, gegebenenfalls mit einem kleinen Überschuß an Epoxidgruppen, um den Verbrauch an Epoxidgruppen für Nebenreaktionen zu kompensieren, bzw. einen vollständigen Einbau der Amine zu gewährleisten. Primäre Amine reagieren mit zwei Epoxidgruppen und führen dadurch zu einer Kettenverlängerung. Im allgemeinen werden dabei die Epoxidharze in organischen Lösemitteln wie aliphatischen Alkoholen, Monoalkylethern vom Ethylenglykol oder Propylenglykol oder auch den entsprechenden Dialkylethern gelöst. Die Reaktion der Amine beginnt schon bei Raumtemperatur und ist im allgemeinen exotherm. Durch Erhöhen der Reaktionstemperatur auf etwa 50 bis 150°C, bevorzugt 60 bis 85°C, ist aus Stabilitätsgründen sicherzustellen, daß nach Reaktionsende keine Epoxidgruppen mehr vorhanden sind. Es können alle Amine im Gemisch gleichzeitig mit den Epoxidgruppen umgesetzt oder es kann stufenweise vorgegangen werden, d.h. ein oder mehrere basische epoxidgruppenhaltige Zwischenprodukte können in verschiedener Reihenfolge hergestellt werden.

Für die Umsetzung mit den Epoxidharzen werden zweckmäßig Amine aus folgenden Gruppen ausgewählt.
1. Mono- oder Di-hydroxyalkylamine der allgemeinen Formel

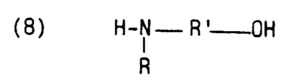

   (9) H-N-(R'―OH)₂

   wobei
   -R = -H oder ein Alkylrest mit 1 bis 8 C-Atomen, bevorzugt Methyl oder Ethyl und
   -R'―ein Alkylen-Rest mit 2 bis 8 C-Atomen, bevorzugt Ethylen oder Propylen ist.
   Amine dieses Typs verbessern durch ihre bevorzugt primären Hydroxylgruppen die Reaktivität des Basisharzes. Typische Beispiele hierfür sind Aminoethanol, N-Methyl-aminoethanol, N-Ethyl-aminoethanol, Di-ethanolamin, Aminoisopropanol, N-Methyl-aminoisopropanol, N-Methyl-amino-n-propanol, N-Ethyl-aminoisopropanol und Di-isopropanolamin.
2. N,N-Dialkyl-aminoalkylamine der allgemeinen Formel 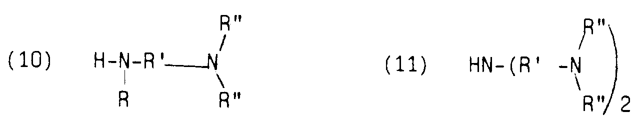 wobei
   -R = H oder -R'',
   -R'― ein Alkylenrest mit 2 bis 8 C-Atomen, bevorzugt Ethylen oder Propylen und
   -R'' ein Alkylrest mit 1 bis 8 C-Atomen, bevorzugt Methyl oder Ethyl bedeuten.
   Amine dieses Typs verbessern durch die Dialkylamino-Gruppen die Basizität und damit die Löslichkeit des Basisharzes. Geeignete Beispiele hierfür sind N-Dimethylaminoethylamin, N-Diethyl-N'-methyl-aminopropylamin, Diethylaminoethylamin, Dimethylaminopropylamin, Diethylaminopropylamin und Dimethylaminoneopentylamin.
3. Langkettige sekundäre Diamine, die unter Kettenverlängerung zur Elastifizierung verwendet werden, der allgemeinen Formel 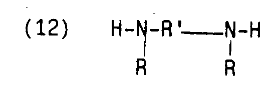 wobei
   -R eine Alkylgruppe oder Hydroxalkylgruppe mit 1 bis 8 C-Atomen und
   -R' eine gegebenenfalls ein oder mehrere Sauerstoffatome in der Kette enthaltende Alkylengruppe mit 2 bis 12 C-Atomen, bevorzugt 4 bis 8 C-Atomen bedeuten.

Das sekundäre Diamin kann auch durch Reaktion des entsprechenden primären Alkylendiamins mit Glycidylethern oder Glycidylestern hergestellt werden. Typische Beispiele sind N,N'-Dialkyl-diaminoalkane wie N,N'-Dimethyldiamino-hexan, Bis-N,N'-cyanethyl-alkylendiamine oder bevorzugt das Reaktionsprodukt aus Hexandiamin mit 2 Mol Cardura E, dem Glycidylester der Versaticsäure. Eine Verlängerung der elastifizierenden Kette kann man unter Bildung von Harnstoffgruppen durch Umsatz von 2 Molekülen der oben beschriebenen sekundären Diamine mit 1 Mol Diisocyanat erhalten. Das sekundäre Diamin kann auch asymmetrisch aufgebaut sein, wenn die beiden Substituenten ungleich sind. Beispielsweise kann das Diamin ein Reaktionsprodukt von N-Hydroxethyl-ethylendiamin oder N-Dimethylaminoethyl-propylendiamin mit Cardura E sein.

Zur weiteren Modifizierung der Epoxidharze können auch primäre Monoalkylamine und/oder bevorzugt sekundäre Dialkylamine wie Diethylamin, N-Octylamin, N-Methyl-N-ethylhexylamin, Didodecylamin oder Methoxypropylamin verwendet werden.

Das Einführen von primären Aminogruppen in den Harzgrundkörper erfolgt vorzugsweise durch Umsetzen von mindestens einer, bevorzugt mindestens zwei Epoxidgruppen pro Molekül enthaltenden Harzen mit einem amino- und/oder hydroxylgruppenhaltigen Ketimin und/oder Aldimin. Bei den bevorzugten Ketiminen handelt es sich um Umsetzungsprodukte aus Ketonen und sekundäre Aminogruppen enthaltenden Alkylaminen wie Methylisobutylketon und Diethylentriamin.

Die Ketimine werden nach bekannten Methoden durch Wasserabspaltung aus den entsprechenden Polyaminen der allgemeinen Struktur R-NH-R'-NH₂ oder den entsprechenden Aminoalkoholen der allgemeinen Struktur HO-R-NH₂ und den geeigneten aliphatischen Ketonen wie Diethylketon, Methylisobutylketon, Ethyl-n-propylketon, oder z.B. Cyclopentanon, Cyclohexanon, Acetophenon hergestellt. Die Reaktionsbedingungen (Reaktionstemperatur, Auswahl des Lösemittels) müssen so geführt werden, daß keine die Ketiminbindung zersetzende Substanzen wie Wasser in dem Reaktionsprodukt vorhanden bleiben.

Das Ketimin schützt die primäre Aminogruppe so (vgl. US-A-3 523 925), daß sie über eine weitere funktionelle Gruppe, z.B. eine Hydroxylgruppe oder bevorzugt eine sekundäre Aminogruppe ohne Schwierigkeiten mit dem Epoxidgrundharz umgesetzt werden kann. Durch die Wahl der Molverhältnisse der eingesetzten Komponenten muß gewährleistet sein, daß kein unumgesetztes niedrigmolekulares Amin im Ansatz zurückbleibt. Die Reaktion der sekundären Aminogruppe des Polyaminoketimins mit der Epoxidgruppe beginnt schon bei Raumtemperatur und ist im allgemeinen exotherm. Um eine vollständige Umsetzung zu erreichen, ist es in der Regel notwendig, die Temperatur zeitweise auf 50 bis 120°C zu erhöhen.

Eine andere Gruppe wasserverdünnbare Basisharze (Komponente A) sind Polymerisatharze, die primäre, sekundäre und/oder tertiäre Aminogruppen und gegebenenfalls Oniumsalzgruppen enthalten. Sie können nach dem Stand der Technik, wie er beispielsweise in DE-A-15 46 854, DE-A-20 57 799, DE-A-23 25 177 oder der DE-A-23 57 152 beschrieben wird, hergestellt werden. Eingesetzte ethylenisch ungesättigte Monomere sind praktisch alle radikalisch polymerisierbaren Monomere, wobei die üblichen Einschränkungen für Copolymerisationen gelten, die durch das Q- und e-Schema nach Alfrey und Price, bzw. durch die Copolymerisationsparameter vorgegeben sind (vgl. Brandrup und Immergut, Polymer Handbuch, 2nd edition, John Wiley and Sons, New York 1975). Da es sich bei der Komponente A) um ein Poly(meth)acrylatharz mit Aminogruppen handelt, ist das Harz nach Neutralisation mit organischen Säuren mit Wasser verdünnbar. Ein derartiges Aminogruppen und Hydroxylgruppen enthaltendes Mischpolymeres wird bevorzugt durch Polymerisation in Lösung erhalten.

Zur Herstellung dieser Komponente A) können Mischungen verschiedener ungesättigter Monomerer verwendet werden, die entweder basische Stickstoffatome enthalten oder in die durch chemische Umsetzungen ein solches basisches Stickstoffatom eingeführt werden kann. So basiert die Komponente A) beispielsweise auf jeweils radikalisch polymerisierbaren
a) 6 bis 40 Gewichtsteilen aminogruppenhaltige Monomeren,
b) 4 bis 50 Gewichtsteilen hydroxylgruppenhaltigen Monomeren und
c) 10 bis 90 Gewichtsteilen weiterer radikalisch polymerisierbarer Monomeren, die außer einer ungesättigten Doppelbindung keine weiteren reaktiven Gruppen enthalten.
wobei gegebenenfalls bis zu 10 Gewichtsteile der Komponente c) durch radikalisch polymerisierbare polyungesättigte Monomere ersetzt sind.

Die radikalisch polymerisierbaren aminogruppenhaltigen Monomeren und hydroxylgruppenhaltigen Monomeren müssen nicht als Gemisch eingesetzt werden. Es können auch Monomerarten verwendet werden, die sowohl Aminogruppen als auch Hydroxylgruppen gleichzeitig enthalten. Für diesen Fall werden 8 bis 60 Gewichtsteile der aminogruppen- und hydroxylgruppenhaltigen Monomeren und 10 bis 90 Gewichtstelle der radikalisch polymerisierbaren Monomeren, die keine weiteren reaktiven Gruppen enthalten, eingesetzt, wobei gegebenenfalls bis zu 10 Gewichtsteile der letzteren radikalisch polymerisierbare polyungesättigte Monomere sind.

Als radikalisch polymerisierbare aminogruppenhaltige bzw. N-gruppenhaltige Monomere werden beispielsweise Monomere der folgenden allgemeinen Formel eingesetzt:

(13) R-CH=CR'-X-A-N(R'')₂

worin
- R =: -R' oder -X-CₙH₂₊₁
- R' =: -H oder -CₙH₂ₙ₊₁
- R''=: -R', -CₙH₂ₙOH und/oder -CₙH₂ₙNR₂
- X =: -COO-, -CONH-, -CH₂O- oder -O-
- A =: -CₙH₂ₙ- oder 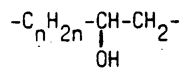 und
- n =: 1 bis 8, bevorzugt 1 bis 3
bedeuten.

Beispiele für ungesättigte N-gruppenhaltige Monomere sind N-Dialkyl-oder N-Monoalkyl-aminoalkyl(meth)acrylate wie beispielsweise N-Diethylaminoethylmethacrylat oder N-tert-Butylaminoethylacrylat oder die entsprechenden N-Alkanol-Verbindungen, N-Dialkyl- oder N-Monoalkyl-aminoalkyl (meth)acrylamid wie beispielsweise N-Dimethyl-amino ethanolacrylamid oder die entsprechenden N-Alkanol-Verbindungen und/oder Vinylgruppen enthaltende heterocyclische Verbindungen mit einem oder mehreren basischen Stickstoffatomen wie beispielsweise N-Vinylimidazol.

Unter radikalisch polymerisierbaren hydroxylgruppenhaltigen Monomeren werden solche verstanden, die neben einer polymerisierbaren ethylenisch ungesättigten Gruppe noch mindestens eine Hydroxylgruppe an einem C2 bis C20 linearen, verzweigten oder cyclischen Kohlenstoffgerüst enthalten.

Es sind hauptsächlich ungesättigte Veresterungsprodukte der allgemeinen Formel

(14) R-CH=CR'-X-B

worin
R,R' und X wie vorstehend definiert sind, und
B eine lineare oder verzweigte C₁₋₆Alkylgruppe mit 1-3 OH-Gruppen ist.

Besonders geeignet sind (Meth)acrylsäure-hydroxyalkylester wie beispielsweise 2-Hydroxyethylacrylat, 2-Hydroxypropylmethacrylat, Butandiol-1.4-monoacrylat, 2.3-Dihydroxypropylmethacrylat, Pentaerythritmonomethacrylat, Polypropylenglykol-monoacrylat oder auch Fumarsäuredihydroxyalkylester. Es können jedoch auch N-Hydroxyalkyl(meth)acrylamide oder N-Hydroxyalkylfumarsäure-mono- oder diamide wie beispielsweise N-Hydroxyethyl-acrylamid oder N-(2-Hydroxypropyl)methacrylamid eingesetzt werden. Besonders elastische Eigenschaften sind beim Einsatz eines Reaktionsproduktes von Hydroxyalkyl(meth)acrylat mit ε-Caprolactan zu erhalten. Andere hydroxylgruppenhaltige Verbindungen sind Allylalkohol, Monovinylether von Polyalkoholen, besonders Diolen wie der Monovinylether des Ethylenglykols oder Butandiols sowie hydroxylgruppenhaltige Allylether oder -ester wie 2.3-Dihydroxypropyl-monoallylether, Trimethylolpropan-monoallylether oder 2.3-Dihydroxypropansäureallylester. Besonders geeignet sind Hydroxyethyl-, Hydroxypropyl- und/oder Butandiol-1.4- mono(meth)acrylat.

Die Auswahl der radikalisch polymerisierbaren Monomeren, die keine weiteren reaktiven Gruppen enthalten, erfolgt nach den mechanischen Eigenschaften des Films und der Verträglichkeit der dabei eingesetzten Harzkombination. Es werden Acrylsäure-alkylester, Methacrylsäurealkylester, Maleinsäure- und/oder Fumarsäure-dialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. "Harte" Monomere mit einer hohen Glasübergangstemperatur als Polymere sind beispielsweise Monomere vom Vinylaromatentyp wie Styrol, α-substituierte Styrole wie α-Methylstyrol, o-, m- und p-Alkylstyrole wie Vinyltoluol oder p-tert-Butylstyrol, halogenierte Vinylbenzole wie o- oder p-Chlorstyrol, Methacrylsäureester mit kurzer Kette wie Methylmethacrylat, Ethylmethacrylat, Propylmethacrylat, Butylmethacrylat, Cyclohexylmethacrylat, Isobornyl-methacrylat, Dihydrodicyclopentadienylmethacrylat, (Meth)acrylamid und/oder auch (Meth)acrylnitril. "Weiche" Monomere sind dagegen Acrylsäureester mit einer langen Alkoholkette wie n-Butylacrylat, Isobutylacrylat, tert.-Butylacrylat, 2-Ethylhexylacrylat und/oder Laurylacrylat. Es können auch ungesättigte Ether wie Ethoxyethylmethacrylat oder Tetrahydrofurfurylacrylat eingesetzt werden. Monomere vom Vinylestertyp, vorzugsweise Vinylester α-verzweigter Monocarbonsäuren, besonders der Versatissäurevinylester, können auch einpolymerisiert werden, wenn geeignete Reaktionsbedingungen und Reaktionscomonomere ausgewählt werden. Unter ethylenisch polyungesättigten Monomeren werden Verbindungen mit mindestens 2 radikalisch polymerisierbaren Doppelbindungen nach der allgemeinen Formel

(15) R-CH=CR'-D-(-CR'=CH-R)_{m ,}

worin
m = 1 bis 3, bevorzugt m = 1 ist
verstanden, wobei außer den weiter oben angegebenen Bedeutungen D das allgemeine tragende chemische Grundgerüst für die reaktive Doppelbindung ist. Beispiele für D sind der o-, m- oder p-Phenylrest und Reste der Formel -X-Alkyl-X'-, worin Alkyl bevorzugt 2 bis 18 C-Atome aufweisen, X und X' gleiche oder verschiedene verbindende Gruppen, z.B. -O-, -CONH-, -COO-, -NHCOO- oder -NH-CO-NH- sind. D kann zum Beispiel ein Benzolring wie im Divinylbenzol sein, der gegebenenfalls auch substituiert sein kann wie p-Methyldivinylbenzol oder o-Nonyldivinylbenzol. Weitere Beispiele für geeignete polyungesättigte Monomere sind Reaktionsprodukte aus Polyalkoholen, besonders Dialkoholen, mit α,β-ungesättigten Carbonsäuren, wie sie schon definiert sind. Beispiele hierfür sind Ethandioldiacrylat, Glykol-dimethacrylat, 1.4-Butandiol-diacrylat, 1.6-Hexandiol-diacrylat, Neopentylglykol-dimethacrylat, Triethylenglykol-dimethacrylat, Polyglykol-400-diacrylat, Glycerin-dimethacrylat, Trimethylolpropan-triacrylat und/oder Pentaerythrit-diacrylat.

Bevorzugt wird der Einsatz von difunktionellen ungesättigten Monomeren wie Butandiol-diacrylat oder Hexandiol-diacrylat. Bei Verwendung von Glycidyl-methacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Lösemittel) sorgfältig abzustimmen, um die gewünschte Viskosität ohne Gelierung zu erhalten.

Die Copolymerisation erfolgt in bekannter Weise durch Lösungspolymerisation unter Zusatz von radikalischen Initiatoren, sowie gegebenenfalls Molekulangewichtsreglern bei Temperaturen von 50 bis 160°C. Sie erfolgt in einer Flüssigkeit, in der sich Monomere und Polymere gemeinsam lösen. Der Gehalt an Monomeren bzw. Polymeren nach der Auspolymerisation beträgt dabei etwa 50 bis 90 Gew.-%. Es wird eine Lösungspolymerisation in organischen Lösemitteln bevorzugt, die mit Wasser verdünnbar sind. Solche Lösemittel sind beispielsweise Ethylenglykol, Ethoxyethanol, Butoxyethanol, Diethylenglykol, Triethylenglykol, Diethylenglykol-dimethylether, Propylenglykol, Methoxypropanol, Ethoxypropanol, Dipropylenglykol-monomethylether, Dipropylenglykol-dimethylether, Diacetonalkohol, Ethanol, Isopropanol, sek. Butanol, tert. Butanol, Aceton, Methoxypropanon, Dioxan, Tetrahydrofuran, N-Methylpyrrolidon oder ihren Gemischen. Im allgemeinen wird das Lösemittel bzw. Lösemittelgemisch bis zur Reaktionstemperatur erwärmt und dann das Monomerengemisch über mehrere Stunden zulaufen gelassen. Um bei Rückflußtemperatur arbeiten zu können, wird der Initiator auf die Siedetemperatur des Lösemittelgemisches abgestimmt. Er zerfällt dabei üblicherweise mit einer Halbwertzeit von 30 Minuten bis zu 10 Stunden. Der Initiator wird entweder im Monomerengemisch kalt gelöst oder aus Sicherheitsgründen während des Zulaufs der Monomeren getrennt zudosiert. Als Initiatoren, die in organischen Lösemitteln löslich sind, werden 0.1 bis 5 Gew.-%, bevorzugt 0.5 bis 3 Gew.-% bezogen auf die eingesetzte Monomeren-Menge an Peroxiden und/oder Azo-Verbindungen zugesetzt. Als Peroxide werden beispielsweise verwendet Benzoylperoxid oder Di-tert.-butylperoxid, Hydroperoxide wie tert.-Butylhydroperoxid oder Cumolhydroperoxid und Perester wie tert.-Butylperoctoat oder tert.-Butylperbenzoat. Thermisch zerfallende Azo-Verbindungen sind beispielsweise 2,2'-Azo-bis(2-cyanopropan) oder 1.1'-Azo-bis-cyclohexancarbonitril. Als Initiatoren können auch radikalbildende Verbindungen vom Dibenzyltyp wie 1.2-Bis-(4-methylphenyl)1.2-dicarbethoxy-1.2-dicyanoethan verwendet werden. Durch den Einsatz von Reglern kann die Molmasse in bekannter Weise herabgesetzt werden. Bevorzugt werden hierzu Mercaptane, halogenhaltige Verbindungen und andere radikalübertragende Substanzen eingesetzt. Besonders bevorzugt sind n- oder tert.-Dodecylmercaptan, Tetrakis-mercaptoacetylpentaerythrit, tert.-Butyl-o-thiokresol, Thiosalicylsäure, Buten-1-ol oder dimeres α-Methylstyrol.

Die Herstellung von Amino-(Meth)acrylatharzen kann auch durch polymeranaloge Umsetzung geschehen. So kann man beispielsweise ein Acrylamidgruppen enthaltendes Copolymeres mit Formaldehyd und einem sekundären Amin und/oder Aminoalkohol umsetzen. Ein besonders bevorzugtes Verfahren wird in der DE-A-34 36 346 beschrieben. Hier werden zunächst epoxidgruppenhaltige monoethylenisch ungesättigte Monomere in das Copolymere einpolymerisiert. Danach wird mit überschüssigen Ammoniak, primären und/oder sekundären Monoaminen und/oder Monoaminoalkoholen umgesetzt und anschließend der Aminüberschuß abdestilliert. Eine ähnliche Umsetzung kann beispielsweise bevorzugt in äquivalenten Mengen mit Ketiminen von Polyaminen erfolgen, die eine sekundäre Aminogruppe und eine oder mehrere primäre Aminogruppen enthalten wie beispielsweise das Monoketimin aus Methylisobutylketon und Methylaminopropylamin oder das Diketimin aus Methylisobutylketon und Diethylentriamin.

Oniumsalz-Gruppen enthaltende Harze sind solche, die beispielsweise quaternäre Ammoniumsalz-Gruppen, quaternäre Phosphoniumsalz-Gruppen und/oder ternäre Sulfoniumsalz-Gruppen enthalten. Sie können beispielsweise durch Reaktion von Epoxidharzen mit tertiären Aminsalzen, Sulfid/Säuremischungen oder Phosphin/Säuremischungen hergestellt werden. Die Reaktionstemperatur ist nicht besonders kritisch und wird in Abhängigkeit von den Ausgangsstoffen und ihren Reaktionsgeschwindigkeiten gewählt. Häufig läuft die Reaktion bei Raumtemperatur oder bei bis zu 70°C erhöhten Temperaturen befriedigend schnell. In manchen Fällen ist es ratsam, höhere Temperaturen von etwa 110°C zu verwenden. Ein Lösemittel ist im allgemeinen nicht notwendig, obwohl es häufig zur besseren Steuerung der Reaktion eingesetzt wird. Beispiele von geeigneten Lösemitteln sind aromatische Kohlenwasserstoffe, Monoalkylether von Ethylenglykol oder Propylenglykol und aliphatische Alkohole. Als Säuren werden im allgemeinen solche verwendet, die entsprechende quaternäre Ammoniumsalze, Sulfoniumsalze oder Phosphoniumsalze bilden. Bevorzugt werden organische Säuren mit einer Dissoziationskonstanten von größer als etwa 10⁻⁵. Beispiele geeigneter Säuren sind Ameisensäure, Essigsäure, Propionsäure, Milchsäure, aber auch Borsäure oder Phosphorsäure Für die Herstellung quaternärer Ammoniumsalze geeignete substituierte oder unsubstituierte Amine sind solche, die die Umsetzung des Aminsalzes mit dem Polyepoxid nicht stören und zu keiner Gelierung führen. Bevorzugte Amine sind tertiäre Trialkylamine wie Trimethylamin, Triethylamin, Triisopropylamin, Methyl-di-butylamin, Di-ethyl-butylamin oder auch Dimethylaminoethanol oder N-Methyl-diisopropanolamin.

Für die Herstellung von Harzen, die tertiäre Sulfoniumbasen enthalten, können beliebige Sulfide verwendet werden, die mit Epoxidgruppen reagieren und keine Gruppen enthalten, die die Umsetzung stören. Das Sulfid kann ein aliphatisches, gemischtes aliphatisch-aromatisches, aralkylisches oder cyclisches Sulfid sein. Beispiele von solchen Sulfiden sind Dialkylsulfide, wie Diethylsulfid, Dipropylsulfid, Dibutylsulfid, Dihexylsulfid oder Alkylphenylsulfide, wie Diphenylsulfid, Ethylphenylsulfid, alicyclische Sulfide, wie Tetramethylensulfid, Pentamethylensulfid, Hydroxyalkylsulfide, wie z.B. Diethanol-, Dipropanol- oder Dibutanol-thioether. Das Polyepoxid kann auch mit Mercaptanen umgesetzt und anschließend das ternäre Sulfoniumsalz durch Reaktion mit 1.2-Epoxiden in Gegenwart von Säure gebildet werden.

Die Herstellung von Harzen mit quaternären Phosphonium-Salz-Gruppen erfolgt mit beliebigen Phosphinen, die keine störenden Gruppen enthalten. Beispiele solcher Phosphine sind aliphatische, aromatische oder alicyclische Phosphine, wobei als spezifische Beispiele folgende Phosphine genannt seien: Niedrige Trialkylphosphine, wie Trimethylphosphin, Methyldiethylphosphin, Triethylphosphin, Tripropylphosphin, Tributylphosphin, gemischte niedrige Alkylphenylphosphine, wie Phenyldimethylphosphin, Phenyldiethylphosphin, Phenyldipropylphosphin, Diphenylmethylphosphin, Diphenylethylphosphin, Diphenylpropylphosphin, Triphenylphosphin und alicyclische Phosphine, wie Tetramethylenmethylphosphin.

Das Verhältnis von tert. Amin, Sulfid oder Phosphin zu Säure ist nicht besonders kritisch. Es wird bevorzugt mindestens ein Äquivalent Säure für jedes gewünschte Mol zur Umwandlung in ein Oniumsalz verwendet. Das Verhältnis zwischen Amin-Säuresalz, Sulfoniumsalz oder Phosphoniumsalz und der Epoxidverbindung kann schwanken. Die optimalen Mengen hängen von den spezifischen Ausgangsstoffen ab. Im allgemeinen können etwa ein bis etwa 50 Gew.-Teile Salz auf etwa 100 Teile Polyepoxid verwendet werden. In manchen Fällen liegen weniger als 100% des Stickstoffs in Form von quaternären Ammoniumsalzgruppen vor. Das ist zum Beispiel der Fall, wenn primäre und sekundäre Amine zur Herstellung der Harze mit quaternären Ammoniumsalzgruppen verwendet werden.

Polymerisatharze mit Oniumsalzgruppen können beispielsweise durch Einpolymerisieren von radikalisch polymerisierbaren ungestättigten Monomeren, die außer der reaktiven ungesättigten Doppelbindung noch eine quaternäre Ammoniumgruppe, eine tertiäre Sulfoniumgruppe oder quaternäre Phosphoniumsalzgruppe enthalten, hergestellt werden, wie beispielsweise das Reaktionsprodukt aus Glycidyl(meth)acrylat und Trialkylaminen, in Gegenwart von Wasser oder Säuren.

Als Vernetzungsmittel (Komponente B) wird eine ausgewählte Mischung von zwei unterschiedlich aufgebauten vollständig blockierten Polyisocyanaten verwendet:
Komponente B1 ist ein modifiziertes, OH-Gruppen-freies, Urethangruppen und gegebenenfalls Harnstoffgruppen enthaltendes Diisocyanat mit blockierten endständigen -NCO-Gruppen und einer mittleren Molmasse von 750 bis 8000. Die untere Grenze liegt bevorzugt bei 1000, besonders bevorzugt bei 1500; die obere Grenze der Molmasse liegt bevorzugt bei 6000, besonders bevorzugt bei 4000. Die Komponente B1 enthält zur Verbesserung der Löslichkeitseigenschaften tertiäre Aminogruppen, wobei die Aminzahl 30 bis 150 beträgt. Die obere Grenze der Aminzahl liegt bevorzugt bei 100, besonders bevorzugt bei 60.

Komponente B1 wird hergestellt durch Umsetzung von difunktionellen aktiven Wasserstoff enthaltenden Verbindungen, die zumindest teilweise tertiäre Aminogruppen enthalten, bei Reaktionstemperaturen von Raumtemperatur bis 100°C mit Diisocyanaten in Gegenwart von gegenüber NCO-Gruppen inerten Lösemitteln oder bei 110 bis 180°C mit blockierten Diisocyanaten. Als H-reaktive difunktionelle Verbindungen werden Dialkohole, Diamine, Aminoalkohole und/oder Polyesterdiole eingesetzt.

Beispiele geeigneter Dihydroxyverbindungen sind die verschiedenen Isomere von linearen, verzweigten und cyclischen Kohlenwasserstoffverbindungen mit 2 bis 20 Kohlenstoffatomen und zwei sekundären und/oder primären Hydroxylgruppen, die zur Einführung der tertiären Aminogruppen in der C-Kette oder als Seitenkette auch tertiäre Aminogruppen enthalten können. Typische Beispiele hierfür sind Ethylenglykol, Propylenglykol-1.2, Propylenglykol-1.3, Butandiol-1.4, Neopentylglykol, Pentandiol-1.5, Hexandiol-1.6, Hexylenglykol, Trimethylhexandiol-1.6, Decandiol-1.10, Bis-(hydroxymethylen)cyclohexan, Bis-ethoxyliertes oder Bis-propoxiliertes Bisphenol A oder der entsprechenden Hydrierungsprodukte, N-Methyl-diethanolamin, N-Ethyldiethanolamin, N-Methyl-diisopropanolamin , N-Methyl-ethanolamin oder 2-Dimethylamino-2-methyl-propandiol-1,3.

Höhermolekulare Dihydroxyverbindungen sind beispielsweise Polyesterdiole, Polycaprolactondiole, Polycaprolactamdiole oder Polyetherdiole. Polyesterdiole werden beispielsweise durch Reaktion der oben aufgeführten Diole mit aliphatischen, cycloaliphatischen oder aromatischen Dicarbonsäuren hergestellt, wie Bernsteinsäure, Glutarsäure, Adipinsäure, Pimelinsäure, Korksäure, Azelainsäure, Sebacinsäure oder Tetradecandicarbonsäure-(1.4), sowie die Isomeren der Cyclohexandicarbonsäure oder Phthalsäure. Dicarbonsäuren, die nach Veresterung aufgrund von Nachbarschaftsgruppeneffekten keine beschleunigte Hydrolyse erleiden, werden bevorzugt, Anstelle der Dialkohole oder auch anteilweise können verwendet werden langkettige primäre und sekundäre Diamine, wie Hexandiamin-1.6, Addukte von 2 Mol Glycidylether oder Glycidylester an Hexandiamin, Bis-N,N'-Cyanethyl-ethylendiamin oder Bis-N,N'-Cyanethylpolyoxypropylendiamin. Besonders bevorzugt werden aliphatische Polyesterdiole wie Hydroxypivalinsäure-neopentylglykolester oder Reaktionsprodukte aus beispielsweise Adipinsäuren und Butandiol-1.4, Sebacinsäure und Neopentylglykol, Acelainsäure und Hexandiol-1.6, beispielsweise unter anteilweisem Zusatz von N-Methyl-diethanolamin zur Einführung der tertiären Aminogruppen. Die besonders bevorzugten aliphatischen Polyesterpolyole sind linear ohne Verzweigungen aufgebaut, werden im Molverhältnis von (n+1) Mol Dihydroxylverbindungen zu n Mol Dicarbonsäure in der Schmelze oder in Gegenwart von inerten Lösemitteln wie Xylol umgesetzt und haben eine zahlenmittlere Molmasse von 250 bis 3000, bevorzugt liegt die untere Grenze bei 400, besonders bevorzugt bei 600. Die obere Grenze ist bevorzugt 2000, besonders bevorzugt 1500. Ist die Molmasse zu klein, so kann die Wasserfestigkeit des entstehenden Films leiden, wird sie dagegen zu hoch, so kann sich die Haftfestigkeit zu anderen Schichten verringern.

Diisocyanate, die für die Herstellung der Komponente B1 geeignet sind, entsprechen den allgemeinen Formeln 16, 17 und 18:

(16) O=C=N-R-N=C=O

in welcher
R für einen aromatischen, gegebenenfalls mit einer oder mehreren Alkylgruppen substituierten oder Methylenbrücken aufweisenden Kohlenwasserstoffrest mit insgesamt 6 bis 15 Kohlenstoffatomen, einen verzweigten oder linearen aliphatischen Kohlenwasserstoffrest mit 2 bis 18, vorzugsweise 6 bis 10 Kohlenstoffatomen, einen cyclischen Kohlenwasserstoffrest mit 6 bis 15 Kohlenstoffatomen oder einen heterocyclischen Ring steht.

Es können alle Isomeren oder Isomerengemische von organischen Diisocyanaten eingesetzt werden. Als aromatische Diisocyanate eignen sich z.B. Phenylendiisocyanat, Toluylendiisocyanat, Xylylendiisocyanat, Biphenylendiisocyanat oder Naphthylendiisocyanat.

Bevorzugt eingesetzt werden aliphatisch-aromatische Diisocyanate der Formel: 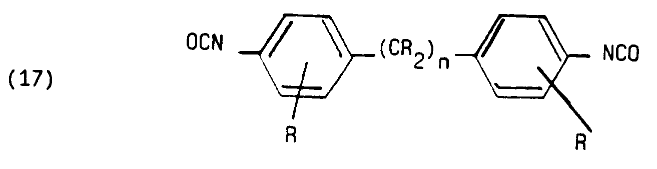
wobei R gleich oder verschieden ist und Wasserstoff oder ein Alkylrest mit 1 bis 8 C-Atomen, vorzugsweise 1 oder 2 C-Atomen, speziell -CH₃ ist und n eine ganze Zahl von 1 bis 10, bevorzugt 1 bis 3 bedeutet. Typische Beispiele für diese Art von Diisocyanaten sind Diphenylmethan-2.4' und/oder -4.4'-diisocyanat, 3.2'-Diisocyanat-4-methyldiphenylmethan oder Diphenylpropan-diisocyanat.

Eine andere Gruppe von bevorzugt eingesetzten Diisocyanaten sind solche, deren NCO-Gruppe direkt an einen linearen, verzweigten oder cycloaliphatischen Rest gebunden ist, Solche Diisocyanate sind Verbindungen der Formel: 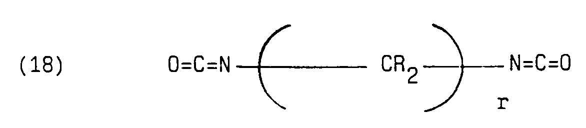
worin r eine ganze Zahl von 2 bis 20, insbesondere 6 bis 8 ist und R, das gleich oder verschieden sein kann, Wasserstoff oder einen Alkylrest mit 1 bis 8 C-Atomen, vorzugsweise 1 oder 2 C-Atomen darstellt.

Hierunter fallen beispielsweise Propylendiisocyanat, Ethylethylendiisocyanat, Dimethylethylendiisocyanat, Methyltrimethylendiisocyanat, Trimethylhexandiisocyanat, Cyclopentylendiisocyanat oder Isophorondiisocyanat. Besonders bevorzugt werden die unter diese Formel fallenden Diisocyanate, deren -NCO Gruppen über -CH₂- Gruppen an einen linearen, verzweigten oder cycloaliphatischen, speziell unverzweigten linearen aliphatischen Rest gebunden sind. Typische Beispiele hierfür sind Trimethylendiisocyanat-1.3, Tetramethylendiisocyanat-1.4, Pentamethylendiisocyanat-1.5, Hexamethylendiisocyanat-1.6, 1.12-Dodecandiisocyanat oder 1.18-Octadecandiisocyanat.

Die als Komponente B2 eingesetzten Polyisocyanate unterscheiden sich von der Komponente B1 dadurch, daß sie im Durchschnitt mehr als zwei reaktive Isocyanatgruppen pro Molekül, die durch Schutzgruppen blockiert sind, für die Vernetzung zur Verfügung stellen. Es werden hierfür bevorzugt drei- und höherwertige, z.B. drei- bis fünfwertige, besonders bevorzugt dreiwertige aromatische und/oder aliphatische blockierte Polyisocyanate mit einer zahlenmittleren Molmasse M̅n̅ von 500 bis 1500 verwendet. Als Polyisocyanate haben sich besonders gut die sogenannten "Lackpolyisocyanate" geeignet, die aus den schon beschriebenen Diisocyanaten hergestellt werden. Sie können z.B. durch Oligomerisation, durch Reaktion von Diisocyanaten mit Wasser oder durch Reaktion von Diisocyanaten mit niedermolekularen drei- oder höherwertigen H-funktionellen Verbindungen wie Polyalkoholen, Polyaminen und Aminoalkoholen hergestellt werden. Als Triisocyanate haben sich Produkte bewährt, die durch Trimerisation von Diisocyanaten oder durch Reaktion von Diisocyanaten mit trifunktionellen OH oder NH-Gruppen enthaltenden Verbindungen entstehen. So entsteht beispielsweise aus Hexandiisocyanat und Wasser das Tris-(6-isocyanatohexyl)-biuret. Durch Trimerisation des Hexandiisocyanat erhält man beispielsweise das Tris-(6-isocyanatohexyl)-isocyanurat, gegebenenfalls im Gemisch mit seinen höheren Homologen. Weitere Beispiele sind Isocyanurate aus Isophorondiisocyanat, Diisocyanatotoluol oder Gemischen aus Diisocyanatotoluol und Hexamethylendiisocyanat. Sehr gut einsetzbare Polyisocyanate sind auch die Urethangruppen aufweisenden Polyisocyanate, die beispielsweise durch Umsetzung von überschüssigen Mengen an 2.4-Diisocyanatotoluol mit einfachen, mehrwertigen Alkoholen der Molmasse 63 bis 300, wie Trimethylolpropan, Trimethylolethan oder Glycerin und gegebenenfalls destillatives Entfernen des nicht umgesetzten Diisocyanatüberschusses erhalten werden. Eine andere Gruppe von polyfunktionellen Isocyanaten sind Oxadiazintrion-alkyldiisocyanate, die an Trimethylolpropan addiert werden können. Höherfunktionelle Polyisocyanate lassen sich auch durch Reaktion von 2 Mol Triisocyanaten mit H-aktiven di-funktionellen Verbindungen, wie Dialkoholen, Diaminen oder Aminoalkoholen wie Ethanolaminen oder N-Methyldiethanolaminen, herstellen.

Die freien Isocyanatgruppen (in den Komponenten B1 und B2) werden gemeinsam oder einzeln verkappt (blockiert), damit sie bei Raumtemperatur gegen Reaktionen mit Wasser oder den aktiven Wasserstoffatomen des Basisharzes (Hydroxyl oder Amin-Wasserstoff-Gruppen) geschützt sind. Als Blockierungsmittel geeignet sind monofunktionelle, aciden Wasserstoff enthaltende Verbindungen mit nur einer einzigen Amin-, Amid-, Imid-, Lactam-, Thio- oder Hydroxylgruppe. Im allgemeinen werden flüchtige, aktiven Wasserstoff enthaltende Verbindungen mit niedrigen Molmassen, vorzugsweise von nicht mehr als 300, mehr bevorzugt von nicht mehr als 200, verwendet. Sie werden zweckmäßig bei Temperaturen über 50°C, vorzugsweise zwischen 80 und 120°C mit den Isocyanatgruppen umgesetzt. Das Blockierungsmittel wird in solchen Mengen eingesetzt, daß auf ein NCO-Äquivalent ein Äquivalent Blockierungsmittel kommt, wobei gegebenenfalls übliche Katalysatoren wie basische Katalysatoren, beispielsweise tertiäre Amine oder geringe Mengen an Zinnsalzen wie Zinn-(II)-octoat oder Dibutylzinndilaurat mitverwendet werden können. Geeignete Blockierungsmittel sind beispielsweise sekundäre oder tertiäre, aliphatische oder cycloaliphatische Alkohole, wie Isopropanol, tert.-Butanol, 2-Ethylhexanol, Furfurol, Cyclohexanol oder Hydroxyalkylester, Dialkylaminoalkohole wie Dimethylaminoethanol, Oxime wie Formaldehydoxim, Acetaldehydoxim, Methylethylketonoxim, Cyclohexanonoxim, Trimethylcylohexanonoxim, 2.2.6.6-Tetra-methyl-piperidon-(4)-oxim, Acetophenonoxim, Benzophenonoxim oder Diäthylglyoxim, Lactame, wie ε-Caprolactam, δ-Valerotactam, γ-Butyrolactam, Pyrrolidon-2, Hydroxamsäuren bzw. deren Ester, wie Acethydroxamsäure, Benzydroxamsäure, Phenole, wie Phenol, Kresol, tert.-Butylphenol, Dimethylaminophenol, N-Alkylamide, wie Methyl-acetamid, Imidazole, wie 2-Methylimidazol, Imide wie Phthalimid oder N-Hydroxymaleinimid, sowie enolisierende Verbindungen wie Malonsäureester, Acetessigsäureester oder NH-funktionelle Enamine.

Es werden aber auch β-Hydroxyglykole oder -glykolether und Glykolamide empfohlen. Oxime und Lactone sind als Verkappungsmittel von besonderem Interesse, weil die damit verkappten Polyisocyanate bei relativ niedrigen Temperaturen reagieren. Zur Blockierung können auch mehr als eine Art von Schutzgruppe, bevorzugt solche mit unterschiedlicher Reaktivität, verwendet werden. Es ist so beispielsweise möglich, ein Gemisch von zwei oder mehreren unterschiedlich blockierten Polyisocyanaten zu verwenden oder ein Polyisocyanat einzusetzen, das mit zwei oder mehreren unterschiedlichen Schutzgruppen blockiert ist.

Besonders bevorzugte Blockierungsmittel sind beim erfindungsgemäßen Verfahren Verbindungen der Formel

(19) X - H ,

in welcher X für 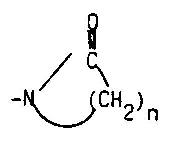
n = 3 - 7 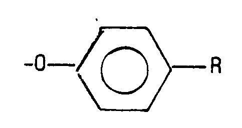
R :-H,-CH₃,-C₉H₁₉ 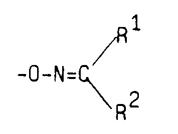
R¹ :-H,-CₙH₂ₙ₊₁
R² =-R¹ (n=2 -5) 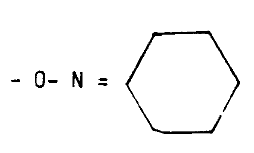
steht.

Bevorzugte Beispiele sind ε-Caprolactam, Methyl-ethyl-ketoxim und Butoxyethanol.
Zur Durchführung der Blockierungsreaktion wird im allgemeinen die Isocyanatkomponente vorgelegt und der Reaktionspartner zugegeben. Die Reaktion kann in Substanz oder auch in Gegenwart geeigneter (inerter) Lösemittel durchgeführt werden.

Die blockierte Polyisocyanatmischung wird entweder nacheinander in beliebiger Reihenfolge oder als Gemisch in das Basisharz eingerührt. Die Mischungsverhältnisse der Komponente B1 zu B2 betragen 1 : 1 bis 1 : 10, bevorzugt 1 : 2 bis 1 : 5. Das Optimum ergibt sich durch Versuche, wobei die Vernetzungsdichte und Steinschlagtestergebnisse aufeinander abgestimmt werden. Mit höherem Gehalt an Komponente B1 wird der eingebrannte Film steinschlagbeständiger, mit höherem Gehalt an Komponente B2 wird der Film lösemittelbeständiger. Wird der beschichtete Gegenstand auf eine Temperatur erwärmt, die ausreichend ist, um die Verkappung des Isocyanats aufzuheben, so tritt die Vernetzung bzw. Härtung des Überzugs zu einem schützenden, unlöslichen Film auf. Die Schutzgruppe spaltet sich bei Einbrenntemperaturen von weniger als 210°C, vorzugsweise weniger als 190°C, besonders unter 180°C, andererseits über 110°C, vorzugsweise über 140°C, besonders bevorzugt über 150°C, wieder ab, damit die freiwerdende Isocyanatgruppe mit dem Basisharz reagieren kann.

Die Vernetzung des wasserverdünnbaren Basisharzes mit blockierten Polyisocyanaten kann gegebenenfalls durch Zusatz von 0.01 bis 2 Gew.-%, speziell 0.5 bis 1 Gew.-%, bezogen auf Festharz an Katalysatoren, wie stark basischer tertiärer Amine und/oder aktiver Metallverbindungen beschleunigt werden. Eine besondere, manchmal synergistische Wirkung wird erreicht durch die Kombination von basischem Medium der abgeschiedenen Harze und den Metallsalzen von Wismut, Blei, Kobalt, Eisen, Antimon und/oder Zinn-II und Zinn-IV-Verbindungen. Besonders bevorzugt werden Katalysatoren wie Eisen-III-acetylacetonat, Zinkacetylacetonat, Dibutylzinn-dilaurat, Di-n-butylzinnoxid, Dibutyl-zinn-dioctyl-maleat, Zinn-octoat, Zinn-oleat, Tetrabutyltitanat und/oder Cobalt-2-ethylhexanoat. Bevorzugt sind Katalysatoren, die im EC-Bad nur bedingt löslich sind und sich in fein verteilter Form mit dem Lack elektrophoretisch abscheiden und im Film ohne Verlaufsstörungen beim Einbrennen gleichmäßig verteilen lassen. Sind ungesättigte Doppelbindungen im Harz enthalten, so können auch die üblichen Metallsikkative gegebenenfalls in Emulsionsform zur Verbesserung der Härtungseigenschaften zugegeben werden.

Durch Protonisieren mit Säuren wird das kationische Bindemittel im Gemisch mit dem Vernetzungsmittel in an sich bekannter Weise wasserverdünnbar gemacht. Beispiele für Säuren sind Ameisensäure, Milchsäure, Essigsäure, Propionsäure, Zitronensäure, Malonsäure, Acrylsäure, Phosphorsäure oder Alkylphosphorsäure. Monobasische niedrigmolekulare organische Carbonsäuren werden bevorzugt. Es muß mindestens so viel Säure zugegeben werden, daß eine stabile Emulsion aus kationischem Bindemittel und Vernetzungsmittel entsteht. Ein Überschuß an Säure, d.h. ein Neutralisationsgrad über 100 %, ist zweckmäßig zu vermeiden. Der MEQ-Wert (Milliäquivalente Säure pro 100 g Festharz) liegt im allgemeinen bei 20 bis 80. Es wird ein möglichst niedriger MEQ-Wert angestrebt, um ein möglichst hohes Abscheideäquivalent zu erhalten.

Der Gehalt an organischen Lösemitteln im Überzugsmittel, z.B. EC-Bad, sollte unter 10 %, besonders unter 3 %, liegen. Als Lösemittel dienen Alkohole, Glykolether, Ketoalkohole, aber auch aliphatische und/oder aromatische Kohlenwasserstoffe verschiedener Kettenlänge. Bei der Auswahl muß berücksichtigt werden, daß das Vernetzungsmittel nicht wasserlöslich ist und Anteile von geeigneten Lösemitteln gegebenenfalls den Dispergiervorgang erleichtern und stabilisieren können. Mit steigendem Lösemittelgehalt verschlechtert sich der Umgriff, die abgeschiedene Schichtdicke erhöht sich und es können Überbeschichtungen auftreten.

Wasserunlösliche Lösemittel wirken hierbei stärker als wasserlösliche. Zur Verlaufsverbesserung und zum Senken des Schichtwiderstandes kann auch anteilweise ein nicht wasserlösliches, hochsiedendes Lösemittel zugesetzt werden, wie Hexylenglykol, Phenoxyethanol, Phenoxypropanol, Ethylhexanol, Isodekanol oder 2.2.4-Trimethylpentandiol-1.3-monoisobutyrat.

Zur Herstellung von Überzugsmitteln bzw. Lacken aus den erfindungsgemäß bereiteten Bindemitteldispersionen ist es möglich, Pigmente, Füllstoffe, Antikratermittel, Korrosionsinhibitoren und/oder übliche Lackhilfsmittel in üblicher Weise an geeigneter Stelle des Herstellungsverfahrens einzudispergieren. Um lösemittelarme Dispersionen herstellen zu können, destilliert man das Lösemittel vor oder nach der Bereitung der wässrigen Dispersion ab. Verwendet man wasserverdünnbare Lösemittel mit einem niedrigeren Siedepunkt als Wasser, wie z.B. Ethanol, so kann man schonend im Vakuum bei Temperaturen von 40 bis 50°C abdestillieren. Setzt man nichtwasserverdünnbare Lösemittel ein, die ein azeotropes Gemisch bilden, so destilliert man das Lösemittel mit dem im Kreis laufenden Wasser über einen Abscheider ab.

Der Feststoffgehalt des Überzugsmittels (z.B. EC-Bades) gemäß der Erfindung beträgt nach Verdünnen mit Wasser zweckmäßig 5 bis 60 Gew.-%. Beim Einstellen des Lackes auf einen höheren Festkörper von 25 bis 50 Gew.-%, bevorzugt 30 bis 45 Gew.-%, werden wasserverdünnbare Einbrennlacke erhalten, die durch Tauchen, Spritzen, Walzen usw. auf das zu lackierende Objekt aufgebracht werden können. Verdünnt man dagegen auf einen Festkörper von 5 bis 30 Gew.-%, vorzugsweise 10 bis 20 Gew.-%, so ist der Lack für die elektrophoretische Abscheidung geeignet. Das Bad wird ständig gerührt, um an der Kathodenoberfläche eine gleichmäßige Temperatur aufrechtzuerhalten und das Absetzen der unlöslichen Bestandteile der Dispersion, z.B. der Pigmente, zu verhindern. Der pH-Wert des Überzugsmittels (z.B. EC-Bades) liegt im allgemeinen zwischen 4.0 und 8.0, vorzugsweise zwischen 5.5 und 7.5. Liegt der pH-Wert zu niedrig, so ist mit einem Angriff der Säure auf das Eisen von Becken, Rohrleitungen und Pumpen zu rechnen. Die elektrophoretische Abscheidung erfolgt zweckmäßig frühestens 24 Stunden nach Herstellen des Bades. Während dieser Zeit wird zweckmäßig kontinuierlich gerührt, um eine gleichmäßige Verteilung zu erhalten. Als Anode werden elektrisch leitfähige, nicht korrodierende Elektroden, z.B. aus nichtrostendem Stahl oder Graphit verwendet. Der an der Kathode zu beschichtende Gegenstand und die Anode werden, wie für die elektrophoretische Abscheidung bekannt, in das wässrige Bad eingetaucht. Es können alle metallisch leitenden Werkstücke beschichtet werden, wie Kupfer, Aluminium, Zinn, Zink, Eisen und Legierungen dieser Metalle. Während des Abscheidens wird das Bad bei Temperaturen von zweckmäßig etwa 15 bis 35°C gehalten. Festkörper, Abscheidetemperatur und -zeit sowie Spannung werden so gewählt, daß die gewünschte Schichtstärke nach Abspülen mit Ultrafiltrat und/oder Wasser und Einbrennen bei Temperature von 130 bis 230°C erhalten wird. So steigt z.B. die Schichtstärke mit zunehmender Beschichtungszeit und Abscheidespannung. Beim Anlegen eines elektrischen Stromes mit einer Spannung von zweckmäßig 50 bis 500 Volt zwischen metallisch leitendem Werkstück und einer Gegenelektrode wird das wasserverdünnbare Basisharz an der Kathode koaguliert. Es transportiert hierbei das wasserunlösliche Vernetzungsmittel, Pigmente, Katalysatoren usw. mit. Hierbei kann sich das Verhältnis von Pigment zum Kunstharz-Bindemittel im abgeschiedenen Film zugunsten des Pigmentes verschieben. Gleichzeitig werden Wasser und die zur Neutralisation verwendete Säure im Bad angereichert. Zum Nachfüllen müssen daher konzentrierte Lacke verwendet werden, die diese Verschiebung durch geänderte Mengenverhältnisse ausgleichen. Diese Korrektur kann auch durch geeignete apparative Einrichtungen, z.B. Elektrodialyseverfahren oder Ultrafiltration erfolgen.

Erfindungsgemäß ist es auch möglich, ein konzentriertes, mit Wasser zu verdünnendes Pasten-Bindemittel, das beispielsweise Oniumsalze enthält, mit z.B. einem Festkörper von etwa 85 bis 50 Gew.-% bereitzustellen, dieses kann in üblicher Weise mit Kugelmühle, Dreiwalze oder Perlmühle pigmentiert werden. Hierzu können übliche Pigmente, wie sie z.B. in der DIN 55 944 beschrieben werden, Füllstoffe, Korrosionsschutz-Inhibitoren und Lackhilfsmitteln, wie Antikratermittel, Verlaufmittel oder Antischaummittel, zugesetzt werden. Naturgemäß wählt man solche aus, die mit Wasser im sauren bis neutralen Medium keine störenden Reaktionen eingehen, keine wasserlöslichen Fremdionen einschleppen und beim Altern nicht in solcher Form ausfallen, daß sie nicht wieder aufgerührt werden können. Die Lacke sind besonders für die Elektrotauchlackierung von Metallen geeignet und geben nach Einbrennen von bevorzugt 15 bis 45 Minuten bei 140 bis 180°C glattverlaufende Grundierungen mit verbesserter Elastizität und Steinschlagfestigkeit, Das Pigment-Bindemittelverhältnis ist abhängig von Dispergierfähigkeit und Viskosität des Bindemittels und liegt im allgemeinen zwischen 0.1 : 1 und 1.5 : 1.

### Wasserverdünnbares Basisharz A1

Zwischenprodukt: In einem Reaktionskolben mit Rührer, Tropftrichter und Rückflußkühler wurden unter Inertgas 582 g Xylol, 1.504 g eines Epoxidharzes auf Basis Bisphenol A mit einem Epoxid-Äquivalentgewicht von 188 und 824 g n-Octylphenol auf 100°C erwärmt. Nach Zusatz von 0.8 g einer 50%igen wäßrigen Lösung von Tetrabutylammoniumchlorid wurde auf 150°C geheizt und bei dieser Temperatur gehalten, bis das Epoxid-Äquivalentgewicht 640 betrug. Anschließend wurde auf 50°C abgekühlt und ein Gemisch aus 720 g Xylol und 720 g Ethylendiamin zugegeben, wobei die Temperatur der exothermen Reaktion bis auf ca. 105°C anstieg. Bei dieser Temperatur wurde 3 Stunden gehalten, Vakuum angelegt und das überschüssige Ethylendiamin abdestilliert. Es wurden mit Wasserdampf die Aminreste abdestilliert, bis mit dem Destillat nur noch eine Aminzahl von unter 0.3 überging.
- Festkörper: : 93.5 Gew.-% (nach 30 Min. Erwärmen auf 180°C)
- Aminzahl: : 177 (mg KOH pro g Festharz)
1.000 g des Zwischenproduktes wurden mit 580 g Methylisobutylketon solange erwärmt, bis mit dem Lösemittel Wasser auskreist. Nach Abtrennen von 26 g Wasser wurde auf 40 bis 45°C abgekühlt und eine Lösung von 244 g Hexandiisocyanat in 488 g trockenem Methyl-isobutylketon über zwei Stunden langsam zugetropft. Anschließend wird auf 80°C erwärmt und diese Temperatur gehalten, bis die NCO-Zahl O beträgt. Das Lösemittel wurde unter Vakuum abdestilliert und mit 150 g Ethoxypropanol verdünnt.
- Festkörper: : 84.7 Gew.-% (nach 30 Min. Erwärmen auf 150°C)
- Aminzahl: : 68
- Viskosität: : 590 mPa·s (nach Verdünnen mit Ethoxypropanol auf 50 Gew.-%. bei 25°C).

### Vernetzungsmittel B1

Polyester: In einem Dreihalskolben mit Rührer, Thermometer und Vigreux-Kolonne wurden 2044 g Adipinsäure und 1890 g Butandiol-1.4 vorsichtig aufgeschmolzen. Anschließend wurde unter Abspalten von Reaktionswasser bis auf 230°C aufgeheizt, wobei jedoch die Kolonnenkopftemperatur auf 98 bis 100°C gehalten wurde. Die Reaktion wurde nach Erhalt einer Säurezahl von unter 2 abgebrochen.

Polyurethanharz: In einem Dreihalskolben mit Rührer, Thermometer und unter einem trocknen Inertgasstrom wurden 980 g Polyester, 238 g N-Methyl- diethanolamin und 238 g N-Methyl-pyrrolidon unter Erwärmen auf 35°C gemischt. Anschließend ließ man ein Gemisch von 1100 g Isophorondiisocyanat und 476 g N-Methyl-pyrrolidon in einer Stunde zulaufen, wobei die Reaktionstemperatur bis auf 80°C anstieg. Bei einer NCO-Zahl von 4.2 wurde auf 50°C gekühlt und 206 g Methyl-ethylketoxim zugegeben. Durch die exotherme Reaktion stieg die Temperatur an. Es wurde bei 80°C gehalten bis die NCO-Zahl unter 0.1 lag.
- Festkörper: : 81.8 Gew.-% (nach 30 Min. Erwärmen auf 150°C im Umluftofen)
- Aminzahl: : 42.8 (mg KOH pro g Festharz)
- Viskosität: : 1.9 Pa·s (nach Verdünnen auf 60 Gew.-% mit N-Methyl-pyrrolidon).

### Vernetzungsmittel B2

875 g Desmodur L®, ein Umsetzungsprodukt von 1 Mol Trimethylolpropan mit 3 Mol Toluylendiisocyanat, das 75%ig in Ethylacetat gelöst ist, wurden auf 90°C unter Ausschluß von Feuchtigkeit und Überleiten von trockenem Inertgas unter gutem Rühren auf 90°C erwärmt. Es wurden 342 g ε-Caprolactam in 3 Stunden so langsam zugegeben, daß eine Reaktionstemperatur von 100°C nicht überschritten wurde. Man hielt diese Temperatur, bis die NCO-Zahl unter 0.1 % abgesunken war. Das Lösemittel wurde über Vakuum weitgehend abdestilliert, und anschließend mit Butoxyethanol auf 80 Gew.-% verdünnt.

### Vergleichsversuch

In 248 g wasserverdünnbarem Kunstharz-Bindemittel A1 wurden unter Zusatz von 162 g Ethoxypropanol 208 g Titandioxid und 2 g Ruß 30 Minuten bei etwa 50°C unter dem Dissolver (3000 Umdrehungen pro Minute) angerieben. Danach wurden 49.6 g wasserverdünnbares A1, 210 g Vernetzungsmittel B2, 5 g Dibutylzinndilaurat, 6.4 g Ameisensäure zugemischt und anschließend langsam mit 2609 g vollentsalztem Wasser verdünnt.

### Beispiel

### Wie Vergleichsversuch unter Verwendung folgender Mengen: 248 g wasserverdünnbares Basisharz A1 162 g Ethoxypropanol 208 g Titandioxid 2 g Ruß 49.6 g wasserverdünnbares Basisharz A1 157.5 g Vernetzungsmittel B2 51,3 g Vernetzungsmittel B1 5 g Dibutylzinndilaurat 6.1 g Ameisensäure 2610 g vollentsalztes Wasser Mit den vorstehenden Bädern wurde eine elektrophoretische Abscheidung auf phosphatiertem Stahlblech unter folgenden Bedingungen mit folgenden Ergebnissen vorgenommen:

| Bad: | | Vergleichsversuch | Beispiel |
|---|---|---|---|
| pH-Wert | | 5.6 | 5.7 |
| Badleitfähigkeit ( µScm⁻¹) | | 584 | 600 |
| Festkörper | | 17 Gew.-% | 17 Gew.-% |
| MEQ-Wert | | 23.5 | 19 |
| Spannung/Schichtdicke | | 2' 35° 260V | 2' 30° 210V |
| | | 18 µm | 18 µm |
| Abscheideäquivalent (C/g) | | 22 | 17 |
| Schichtwiderstand-Überzug (Ω x 10⁵) | | 4300 | 3150 |
| Pendelhärte | | 138'' | 130'' |
| Impacttest | | 23 Kg.cm (20 inch pound) | 40 Kg.cm (35 inch pound) |
| Gitterschnitt | | 1-2 (n.i.O.) | 0 (i.O.) |
| Lösemittelbeständigkeit | | i.O. | i.O. |
| Salzsprühtest 720 h/Bo 132 | | U = 0.5 mm | U = 0.5 mm |

| Steinschlagtest: | | Abplatzfläche: | |
|---|---|---|---|
| Monosteinschlag: | + 20°C | 6 mm² | 3 mm² |
| | - 20°C | 9 mm² | 3 mm² |
| Multisteinschlag | | n.i.O. | i.O. |
| i.O. = in Ordnung n.i.O. = nicht in Ordnung | | | |

## Patentansprüche

1. Wasserverdünnbares Bindemittel, enthaltend
A) 40 bis 90 Gew.-% durch Neutralisation mit Säuren wasserverdünnbare Basisharze mit einer zahlenmittleren Molmasse Mn von 500 bis 20000 und einer Aminzahl von 30 bis 150, die primäre und/oder sekundäre und/oder tertiäre Aminogruppen sowie mindestens 2 Hydroxylgruppen pro Moleküle enthalten.
B) 10 bis 60 Gew.-% eines vollständig blockierten Polyisocyanatgemisches aus
1. einem oder mehreren, Urethangruppen und gegebenenfalls Harnstoffgruppen enthaltenden, OH-Gruppen-freien, endständigen blockierten Diisocyanaten, bei denen es sich um Reaktionsprodukte aus H-reaktiven difunktionellen Verbindungen, die zumindest teilweise tertiäre Aminogruppen enthalten, mit Diisocyanaten handelt, mit einer zahlenmittleren Molmasse Mn von 750 bis 8000 und einem Gehalt an tertiären Aminogruppen entsprechend einer Aminzahl von 30 bis 150, und
2. mehr als zwei blockierte Isocyanatgruppen aufweisenden aromatischen und/oder aliphatischen blockierten Polyisocyanaten mit einer zahlenmittleren Molmasse Mn von 500 bis 1500,
wobei die Komponenten B1) und B2) in einem Gewichtsverhältnis von 1 : 1 bis 1 : 10 enthalten sind, und wobei das Äquivalentverhältnis von primären bzw. sekundären Aminogruppen und Hydroxylgruppen der Komponente A) zu den blockierten Isocyanatgruppen der Komponente B) im Bereich von 1 : 0,1 bis 1,5 liegt.

2. Wasserverdünnbares Bindemittel nach Anspruch 1, in dem das wasserverdünnbare Basisharz A) zusätzlich Oniumsalzgruppen aufweist.

3. Wasserverdünnbares Bindemittel nach einem der Ansprüche 1 oder 2, in dem das wasserverdünnbare Basisharz A) ein Aminoepoxidharz oder ein Aminoacrylatharz ist.

4. Wasserverdünnbares Bindemittel nach einem der Ansprüche 1 bis 3, in dem die Komponente B1 eine zahlenmittlere Molmasse von 1000 bis 8000 hat.

5. Wasserverdünnbares Bindemittel nach einem der Ansprüche 1 bis 4, in dem die Komponente B1 eine Aminzahl von 30 bis 100 aufweist.

6. Wasserverdünnbares Bindemittel nach einem der Ansprüche 1 bis 5, in dem die Komponente B1 aus Dialkanolen als H-reaktive difünktionelle Verbindungen gebildet wurde.

7. Wasserverdünnbares Bindemittel nach Anspruch 6, in dem die Dialkanole lineare aliphatische Polyesterdiole mit einer zahlenmittleren Molmasse M̅n̅ von 250 bis 3000 sind.

8. Wasserverdünnbares Bindemittel nach Anspruch 6 oder 7, in dem das zur Bildung der Komponente B1 verwendete Diisocyanat eines oder mehrere der allgemeinen Formel 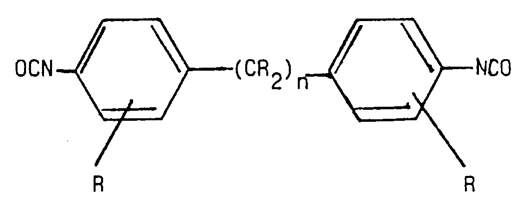 wobei R gleich oder verschieden ist und Wasserstoff oder ein Alkylrest mit 1 bis 8 C-Atomen ist und n eine ganze Zahl von 1 bis 10 ist,
und/oder der Formel 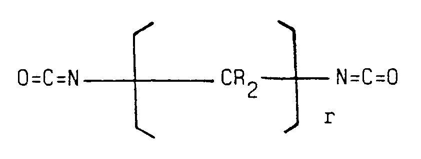 worin r eine ganze Zahl von 2 bis 20 ist und R gleich oder verschieden sein kann und Wasserstoff oder einen Alkylrest mit 1 bis 8 C-Atomen bedeutet, ist.

9. Wasserverdünnbares Bindemittel nach einem der vorhergehenden Ansprüche, worin die Komponente B2 durch Trimerisation von Diisocyanaten gebildet wurde.

10. Wasserverdünnbares Bindemittel nach einem der Ansprüche 1 bis 8, worin die Komponente B2 durch molare Umsetzung von Diisocyanaten mit drei Hydroxylgruppen enthaltenden Verbindungen erhalten wurde.

11. Wasserverdünnbares Bindemittel nach einem der Ansprüche 1 bis 8, worin die Komponente B2 durch Reaktion von Diisocyanaten mit Wasser gebildet wurde.

12. Wasserverdünnbares Bindemittel nach einem der vorhergehenden Ansprüche, worin die Komponente B2 drei bis fünf blockierte Isocyanatgruppen aufweist.

13. Verwendung der wasserverdünnbaren Bindemittel nach einem der Ansprüche 1 bis 12 zur Herstellung von wässrigen Überzugsmitteln.

14. Verwendung der wasserverdünnbaren Bindemittel nach einem der Ansprüche 1 bis 12 zur Herstellung von wässrigen an der Kathode abscheidbaren Überzugsmitteln.

15. Verwendung der wasserverdünnbaren Bindemittel nach einem der Ansprüche 1 bis 12 für Grundierungszwecke in Lackaufbauten.

16. Verwendung der wasserverdünnbaren Bindemittel nach einem der Ansprüche 1 bis 12 bei der Lackierung von Fahrzeugen, Kraftfahrzeugen, deren Teilen und Zubehör.

## Claims

1. A water-thinnable binder vehicle, containing
A) 40 to 90 % by weight of base resins which can be thinned with water by neutralisation with acids, having a number average molecular weight Mn of 500 to 20,000 and an amine number of 30 to 150, and which contain primary and/or secondary and/or tertiary amino groups as well as at least 2 hydroxyl groups per molecule,
B) 10 to 60 % by weight of a completely blocked polyisocyanate mixture comprising
1. one or more terminally blocked diisocyanates, which are free from OH groups and which contain urethane groups and optionally urea groups, which are reaction products of difunctional compounds with diisocyanates, which difunctional compounds contain reactive H and which contain the tertiary amino groups at least in part, which terminally blocked diisocyanates have a number average molecular weight Mn of 750 to 8000 and a content of tertiary amino groups corresponding to an amine number of 30 to 150, and
2. aromatic and/or aliphatic blocked polyisocyanates which contain more than two blocked isocyanate groups and which have a number average molecular weight Mn of 500 to 1500,
wherein components B1) and B2) are contained in a weight ratio of 1 : 1 to 1 : 10, and wherein the equivalent ratio of primary or secondary amino groups and hydroxyl groups of component A) to the blocked isocyanate groups of component B) falls within the range of 1 : 0.1 to 1.5.

2. A water-thinnable binder vehicle according to claim 1, wherein the water-thinnable base resin A) additionally contains onium salt groups.

3. A water-thinnable binder vehicle according to either one of claims 1 or 2, wherein the water-thinnable base resin A) is an amino epoxy resin or an amino acrylate resin.

4. A water-thinnable binder vehicle according to any one of claims 1 to 3, wherein component B1 has a number average molecular weight of 1000 to 8000.

5. A water-thinnable binder vehicle according to any one of claims 1 to 4, wherein component B1 has an amine number of 30 to 100.

6. A water-thinnable binder vehicle according to any one of claims 1 to 5, wherein component B1 was formed from dialkanols as the difunctional compounds which contain reactive H.

7. A water-thinnable binder vehicle according to claim 6, wherein the dialkanols are straight chain aliphatic polyester diols having a number average molecular weight M̅n̅ of 250 to 3000.

8. A water-thinnable binder vehicle according to claims 6 or 7, wherein the diisocyanate used for the formation of component B1 is one or more of general formula 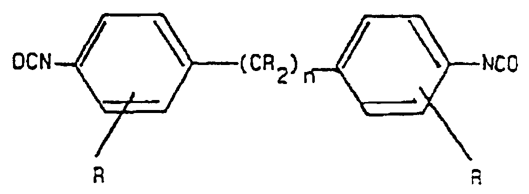 where R is the same or different and is hydrogen or an alkyl radical containing 1 to 8 C atoms and n is an integer from 1 to 10,
and/or of formula 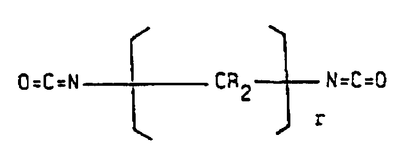 where r is an integer from 2 to 20 and R may be the same or different and represents hydrogen or an alkyl radical containing 1 to 8 C atoms.

9. A water-thinnable binder vehicle according to any one of the preceding claims, wherein component B2 was formed by trimerisation of diisocyanates.

10. A water-thinnable binder vehicle according to any one of claims 1 to 8, wherein component B2 was obtained by molar transformation of diisocyanates with compounds containing three hydroxyl groups.

11. A water-thinnable binder vehicle according to any one of claims 1 to 8, wherein component B2 was formed by the reaction of diisocyanates with water.

12. A water-thinnable binder vehicle according to any one of the preceding claims, wherein component B2 contains three to five blocked isocyanate groups.

13. Use of the water-thinnable binder vehicles according to any one of claims 1 to 12 for the production of aqueous coating media.

14. Use of the water-thinnable binder vehicles according to any one of claims 1 to 12 for the production of cathodically depositable aqueous coating media.

15. Use of the water-thinnable binder vehicles according to any one of claims 1 to 12 for priming purposes in lacquer structures.

16. Use of the water-thinnable binder vehicles according to any one of claims 1 to 12 in the painting of vehicles, motor vehicles, their parts and accessories.

## Revendications

1. Liant diluable à l'eau, contenant
A) de 40 à 90% en poids de résines de base diluable à l'eau par neutralisation avec des acides avec une masse moléculaire moyenne en nombre Mn de 500 à 20000 et un indice d'amine de 30 à 150, et qui contiennent des groupes amino primaires et/ou secondaires et/ou tertiaires ainsi qu'au moins 2 groupes hydroxyle par molécule,
B) de 10 à 60% en poids d'un mélange de polyisocyanates entièrement bloqués constitués de
1 ) un ou plusieurs diisocyanates bloqués en position finale, contenant des groupes uréthane et éventuellement des groupes urée, dépourvus de groupes OH, pour lesquels il s'agit de produits de réaction de composés bifonctionnels H-réactifs, qui contiennent au moins en partie des groupes amino tertiaires, avec des diisocyanates, avec une masse moléculaire moyenne en nombre de 750 à 8000 et une teneur en groupes amino tertiaires correspondant à un indice d'amine de 30 à 150, et
2 ) des polyisocyanates bloqués aromatiques et/ou aliphatiques présentant plus de deux groupes isocyanates bloqués avec une masse molaire moyenne en nombre Mn de 500 à 1500,
où les composants B1) et B2) sont contenus dans un rapport pondéral de 1:1 à 1:10, et où le rapport équivalent des groupes amino primaires ou secondaires et des groupes hydroxyles du composant A) aux groupes isocyanates bloqués du composant B) se situe dans un intervalle de 1:0,1 à 1,5.

2. Liant diluable à l'eau selon la revendication 1, dans lequel la résine de base diluable à l'eau A) présente en outre des groupes de sel d'onium.

3. Liant diluable à l'eau selon l'une des revendications 1 ou 2, dans lequel la résine de base diluable à l'eau A) est une résine aminoépoxyde ou une résine aminoacrylate.

4. Liant diluable à l'eau selon l'une des revendications 1 à 3, dans lequel le composant B1 a une masse molaire moyenne en nombre de 1000 à 8000.

5. Liant diluable à l'eau selon l'une des revendications 1 à 4, dans lequel le composant B1 présente un indice d'amine de 30 à 100.

6. Liant diluable à l'eau selon l'une des revendications 1 à 5, dans lequel le composant B1 a été formé à partir de dialcanols sous forme de composés bifonctionnels H-réactifs.

7. Liant diluable à l'eau selon la revendication 6, dans lequel les dialcanols sont des polyesterdiols aliphatiques linéaires ayant une masse molaire moyenne en nombre Mn de 250 à 3000.

8. Liant diluable à l'eau selon la revendication 6 ou 7, dans lequel le diisocyanate utilisé pour la formation du composant B1 est un ou plusieurs composés de formule générale 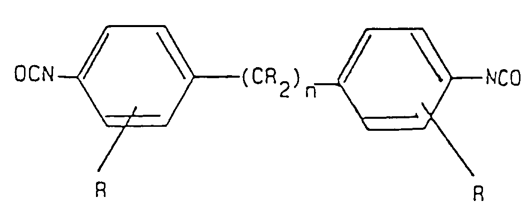 dans laquelle R est identique ou différent et est un hydrogène ou un radical alkyle ayant de 1 à 8 atomes de carbone et n est un nombre entier de 1 à 10,
et/ou de formule 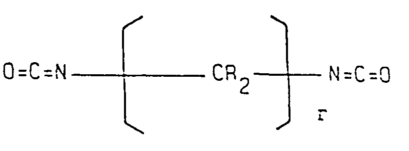 dans laquelle r est un nombre entier de 2 à 20 et R peut être identiques ou différent et représente un hydrogène ou un radical alkyle ayant de 1 à 8 atomes de carbone.

9. Liant diluable à l'eau selon l'une des revendications précédentes, dans lequel le composant B2 a été formé par trimérisation de diisocyanates.

10. Liant diluable à l'eau selon une des revendications 1 à 8, dans lequel le composant B2 a été obtenu par réaction molaire de diisocyanates avec trois composés contenant des groupes hydroxyles.

11. Liant diluable à l'eau selon l'une des revendications 1 à 8, dans lequel le composant B2 a été formé par réaction de diisocyanates avec de l'eau.

12. Liant diluable à l'eau selon l'une des revendications précédentes, dans lequel le composant B2 présente de trois à cinq groupes isocyanates bloqués.

13. Application du liant diluable à l'eau selon l'une des revendications 1 à 12 à la préparation de moyens de revêtements aqueux.

14. Application des liants aqueux selon l'une des revendications 1 à 12 à la préparation de moyens de revêtements aqueux séparables à la cathode.

15. Application des liants aqueux selon l'une des revendications 1 à 12 dans des buts d'apprêt dans la structure des laques.

16. Application des liants diluables à l'eau selon l'une des revendications 1 à 12 dans la peinture des voitures, des camions, de leurs pièces et équipements.
